# EUROPÄISCHE PATENTSCHRIFT

(11) **EP 1 453 651 B1**
(45) Veröffentlichungstag und Bekanntmachung des Hinweises auf die Patenterteilung: **21.03.2007**
(21) Anmeldenummer: 02749153.9
(22) Anmeldetag: 22.07.2002
(51) Int. Cl.: B29C 47/02, H01B 13/14, H01B 13/24

(54) **VERFAHREN ZUR ISOLIERUNG VON STATORWICKLUNGEN**
METHOD FOR INSULATING STATOR WINDINGS
PROCEDE POUR L'ISOLATION D'ENROULEMENTS DE STATOR

(30) Priorität: 21.07.2001 DE 10135718
(43) Veröffentlichungstag der Anmeldung: 08.09.2004
(73) Patentinhaber: Alstom Technology Ltd, 5401 Baden (CH)
(72) Erfinder: BAUMANN, Thomas, Dr., CH-5430 Wettingen (CH); BOCK, Albrecht, 68519 Viernheim (DE); OESTERHELD, Jörg, Dr., CH-5413 Birmenstorf (CH)
(86) Internationale Anmeldenummer: PCT/IB2002/002853
(87) Internationale Veröffentlichungsnummer: WO 2003/009988

(56) Entgegenhaltungen:
- US-A- 5 650 031
- US-A- 5 710 475
- US-A1- 2001 045 687
- US-A1- 2001 047 878
- US-A1- 2002 046 875
- PATENT ABSTRACTS OF JAPAN vol. 007, no. 145 (M-224), 24. Juni 1983 (1983-06-24) & JP 58 056836 A (MATSUSHITA DENKO KK), 4. April 1983 (1983-04-04)

## Beschreibung

### Technisches Gebiet

Die Erfindung betrifft ein Verfahren zur Isolierung von Statorwicklungen für rotierende elektrische Maschinen, insbesondere für Gleichstrommaschinen und Wechselstrommaschinen.

### Stand der Technik

Im allgemeinen weisen derartige elektrische Maschinen einen Stator und einen Rotor auf, um mechanische Energie in elektrische Energie umzuwandeln (Generator) oder, um umgekehrt, elektrische Energie in mechanische Energie umzuwandeln (Elektromotor). In den Leitern der Statorwicklungen werden, je nach Betriebszustand der elektrischen Maschine, Spannungen erzeugt. Daher müssen die Leiter der Statorwicklungen entsprechend isoliert werden, um einen Kurzschluß zu vermeiden.

Statorwicklungen in elektrischen Maschinen können unterschiedlich aufgebaut sein. Es besteht die Möglichkeit mehrere gegeneinander isolierte Einzelleiter zu bündeln und das so entstandene Leiterbündel, welches oft als Leiterstab bezeichnet wird, mit einer sogenannten Hauptisolierung zu versehen. Zur Herstellung der Statorwicklungen werden mehrere Leiterstäbe an ihren Stirnflächen miteinander verbunden. Diese Verbindung kann beispielsweise über eine Metallplatte erfolgen, an die sowohl die jeweils isolierten Einzelleiter des ersten Leiterstabs als auch die jeweils isolierten Einzelleiter des zweiten Leiterstabs leitend angeschlossen werden. Daher sind die Einzelleiter des Leiterstabes im Bereich der Metallplatte nicht voneinander isoliert.

Alternativ zur Bündelung der Einzeleiter in Leiterstäbe wird ein langer, isolierter Einzelleiter zu einer ebenen, ovalen Spule gewickelt, die Spulenurform oder Fisch genannt wird. In einem anschließenden Vorgang, der sogenannten Spreizung, werden die Spulenurformen bzw. Fische in ihre endgültige Form überführt und in den Stator eingebaut.

In beiden oben beschriebenen Fertigungstechniken können sowohl runde als auch rechteckige Einzelleiter eingesetzt werden. Die für die Statorwicklungen aus mehreren Einzelleitern gefertigten Leiterstäbe bzw. Spulenurformen können wiederum jeweils runden bzw. rechteckigen Querschnitt haben. In der vorliegenden Erfindung werden Leiterstäbe bzw. Spulenurformen mit rechteckigem Querschnitt, die bevorzugt aus rechteckigen Einzelleitern gefertigt wurden, betrachtet. Die Leiterstäbe können sowohl verroebelt sein d.h. mit gegeneinander verdrillten Einzel leitern, als auch nicht verroebelt sein d.h. mit unverdrillten, zueinander parallel verlaufenden Einzelleitern.

Gemäß dem Stand der Technik wird zur Isolierung der Statorwicklungen (z.B. Leiterstäbe, Spulenurformen, Spulen) in der Regel Glimmerpapier, welches aus mechanischen Gründen durch einen Glasgewebeträger verstärkt ist, in Bandform um den Leiter gewickelt. Anschließend wird der umwickelte Leiter, welcher gegebenenfalls nach der Bewicklung noch verformt wird, mittels eines aushärtenden Harzes imprägniert, was zu einer duroplastischen, nicht schmelzbaren Isolierung führt. Es sind ferner glimmerhaltige Isolierungen mit thermoplastischer Matrix bekannt, die ebenfalls in Bandform auf den Leiter aufgebracht werden, wie beispielsweise Asphalt, Schellack (Brown Boveri Review Vol. 57, S. 15: R. Schuler; "Insulation Systems for High-Voltage Rotating Machines") Polysulfon und Polyetheretherketon (DE 43 44044 A1). Diese Isolierungen sind oberhalb der Schmelztemperatur der Matrix wieder plastisch verformbar.

Diese durch Umwickeln aufgebrachten Isolierungen von Statorwicklungen weisen den Nachteil auf, daß Ihre Fertigung zeit- und kostenintensiv ist. In diesem Zusammenhang sind der Wickelprozeß und der Imprägnierprozeß besonders zu erwähnen, welche aufgrund der physikalischen Eigenschaften des Glimmerpapiers und des lmprägnierharzes nicht mehr wesentlich beschleunigt werden können. Ferner ist dieser Fertigungsprozeß gerade bei dicken Isolierungen fehleranfällig, wenn sich das Glimmerpapier nur unzureichend an die Statorwicklung anpaßt. Insbesondere können durch eine ungenügende Justierung der Wickelmaschine nach dem Umwickeln der Statorwicklung in dem Glimmerpapier Falten und Risse auftreten, beispielsweise durch einen zu steilen oder zu flachen Winkel zwischen dem Glimmerpapier und dem Leiter oder durch eine ungeeignete statische oder dynamische Zugkraft, welche beim Umwickeln auf das Glimmerpapier wirkt. Ferner kann es durch zu großen Bandauftrag zu Überpressungen kommen, die eine gleichmäßige Durchimprägnierung der Isolierung in der Imprägnierform verhindern. Somit kann eine lokal oder allgemein fehlerhafte Isolierung erzeugt werden, welche eine reduzierte Kurzzeit- und/oder Langzeitfestigkeit aufweist. Dies setzt die Lebensdauer von derartigen Isolierungen für Statorwicklungen erheblich herab.

Ferner sind aus der Kabeltechnik Herstellungsverfahren zur Ummantelung von Leiterbündeln bekannt, wobei stets Leiterbündel mit rundem Querschnitt in einem Extrusionsprozeß mit einem Thermoplast oder mit Elastomeren ummantelt werden.

Die Druckschrift US-A-5,650,031, welche den gleichen Gegenstand wie die WO 97/11831 betrifft, beschreibt ein Verfahren zur Isolierung von Leiterstäben für Statorwicklungen, bei welchem die Leiterstäbe einzeln durch eine zentrale Bohrung eines Extruders geführt werden. Dabei wird der Leiterstab, welchem eine komplexe Form sowie einen rechteckigen Querschnitt aufweist, mit einem extrudierten thermoplastischen Material gleichzeitig an jeder Seite der komplexen Form insbesondere durch eine Ko-Extrusion ummantelt.

Des weiteren sind in der Kabeltechnik polymere Isolierungen bekannt, welche auf die Kabel mittels einer Warmschrumpftechnik aufgebracht werden. Es handelt sich dabei um vorfabrizierte Schläuche mit rundem Querschnitt aus vernetzbaren Thermoplasten, Elastomeren, Polyvinylidenfluorid, PVC, Silikonelastomer oder Teflon. Diese Materialien werden nach der Fabrikation im erwärmten Zustand gedehnt und abgekühlt. Nach der Abkühlung behält das Material seine gedehnte Form bei.

Dies geschieht beispielsweise dadurch, daß sich kristalline Zentren bilden, welche die gestreckten Makromoleküle fixieren. Nach erneuter Erwärmung über den kristallinen Schmelzpunkt hinaus lösen sich die kristallinen Zonen auf, wobei die Makromoleküle wieder ihren ungedehnten Zustand einnehmen und somit die Isolierung aufgeschrumpft wird. Ferner sind Kaltschrumpf-Schläuche bekannt, die im kalten Zustand mechanisch aufgeweitet werden. Im aufgeweiteten Zustand werden diese Schläuche über eine Stützkonstruktion gezogen, welche die Schläuche dauerhaft im gedehnten Zustand hält. Nachdem die Schläuche über die zu isolierenden Bauteile geschoben und fixiert worden sind, wird die Stützkonstruktion in geeigneter Weise entfernt, beispielsweise durch Herausziehen einer spiralförmig perforierten Stützkonstruktion. Derartige Schrumpftechniken können jedoch bei Statorwicklungen mit rechteckigem Querschnitt nicht verwendet werden, da die Schläuche mit rundem Querschnitt an den Kanten der rechteckigen Leiter entweder unmittelbar nach dem Schrumpfen oder nach einer kurzen Belastung während des Betriebs der elektrischen Maschine aufgrund der thermischen und mechanischen Beanspruchung leicht reißen.

Bereits bei der Herstellung der Statorwicklungen, insbesondere beim Biegen der Leiter, und beim Handling, insbesondere beim Einbau in den Stator, muß die Isolierung eine beachtlich hohe mechanische Beanspruchung verkraften, welche die Isolierung der Statorwicklungen beschädigen kann. Darüber hinaus unterliegt die Isolierung der Statorwicklungsleiter beim Betrieb der elektrischen Maschine einer kombinierten Beanspruchung. Einerseits wird die Isolierung zwischen dem Leiter, an welchem eine hohe Spannung anliegt, und dem Stator durch ein resultierendes elektrisches Feld dielektrisch beansprucht. Andererseits ist die Isolierung durch die im Leiter erzeugte Wärme einer thermischen Wechselbeanspruchung ausgesetzt, wobei beim Durchfahren der jeweiligen Betriebszustände der Maschine ein hohes Temperaturgefälle in der Isolierung vorliegt. Aufgrund der unterschiedlichen Ausdehnung der beteiligten Materialien treten auch mechanische Wechselbeanspruchungen auf. Dabei kommt es zum einen zu einer Scherbeanspruchung der Verklebung zwischen Leiter und Isolierung und zum anderen besteht an der Grenzfläche zwischen der Isolierung und der Nutwand des Stators die Gefahr der Abrasion. Aufgrund dieser hohen Beanspruchungen kann eine Rißbildung der Isolierung der Statorwicklungen auftreten, welche einen Kurzschluß verursacht. Folglich kommt es zum Ausfall der gesamten elektrischen Maschine, wobei die Reparatur mit einem hohen zeitlichen und kostenintensiven Aufwand verbunden ist.

### Darstellung der Erfindung

Hier setzt die Erfindung an. Der Erfindung, wie sie in den Ansprüchen gekennzeichnet ist, liegt die Aufgabe zugrunde, ein einfaches, kostengünstiges Verfahren zur Isolierung von Statorwicklungen für rotierende elektrische Maschinen zu schaffen, wobei isolierte Statorwicklungen hergestellt werden, weiche die Isolierung der Statorwicklung über die vorgesehene Lebensdauer der elektrischen Maschine gewährleisten.

Diese Aufgabe wird durch ein Verfahren zum Aufbringen der Hauptisolierung von Leiterstäben, insbesondere Leiterstäben für Statorwicklungen, gelöst, wobei die Leiterstäbe einen rechteckigen Querschnitt aufweisen und das Verfahren die folgenden Schritte umfasst:
a) Verbinden der einzelnen Leiterstäbe zu einem quasi-unendlichen Leiterstab mit rechteckigem Querschnitt;
b) kontinuierliche Ummantelung des quasi- unendlichen, rechteckigen Leiterstabes mit einer Hauptisolierung;
c) Heraustrennen oder Lösen der nicht verwendbaren Verbindungsstellen.

Auf diese Weise wird gegenüber den aus dem Stand der Technik bekannten Wikkelverfahren ein deutlich einfacheres und kostengünstigeres Verfahren zur Isolierung von Leiterstäben zur Verfügung gestellt.

Besonders vorteilhaft werden in Schritt a geradlinig gestreckte Leiterstäbe verwendet, wobei die Ummantelung in Schritt b mit einem Elastomer, insbesondere einem Silikonelastomer erfolgt. Die Erfindung benutzt die hohe Elastizität des Elastomers bei gleichzeitig hoher thermischer und elektrischer Beanspruchbarkeit. In einer vorteilhaften Ausgestaltung des Verfahrens wird der unter Schritt a zusammengesetzte, quasi-unendliche Leiter in einem Extrudierverfahren mit dem Elastomer ummantelt.

Alternativ kann zur Ummantelung die Blasformtechnik verwendet werden, bei der zunächst ein Schlauch extrudiert wird, um ihn anschließend über den Leiter zu legen.

In einem weiteren erfindungsgemäßen Verfahren wird zwischen Isolierschicht und Leiteroberfläche ein Innenglimmschutz angebracht. Dies erfolgt beispielsweise durch zwei- bis dreifache Ko-Extrusion oder vorteilhaft durch die Blasformtechnik, mit der viele Einzelschichten übereinander gelegt werden können.

In einem besonders bevorzugten Verfahren werden die Leiterstäbe erst nach der Ummantelung mit dem Elastomer in ihre endgültige Form gebracht. Durch das Biegen der Evolventen wird die aufgebrachte Isolierung stark gedehnt. Die erfindungsgemäße Verwendung von Elastomer erweist sich hierbei als besonders vorteilhaft, da sie die mechanische, elektrische bzw. thermische Beeinträchtigung der durch das Biegen beanspruchten Isolierung reduziert bzw. gänzlich verhindert.

Ist die Extrudiervorrichtung so ausgelegt, dass mit ihr auch bereits gebogene Leiterstäbe beschichtet werden können, so können die oben beschriebenen Verfahren der quasikontinuierlichen Extrusion vorteilhaft auch auf bereits gebogene Leiterstäbe angewendet werden. In diesem Fall werden die gebogenen Leiterstäbe in Schritt a provisorisch zu einem quasi-unendlichen, mehrfach gebogenen Leiter verbunden, welcher in dieser Form der Extrudiervorrichtung in geeigneter Weise zugeführt wird. Neben Elastomeren sind für dieses Verfahren vorteilhaft auch die kostengünstigeren Thermoplaste einsetzbar.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: einen quasi-unendlichen, geraden Leiterstab der durch eine Extrudiervorrichtung läuft;
- Figur 2: einen quasi-unendlichen, gebogenen Leiterstab der durch eine Extrudiervorrichtung läuft;
- Figur 3: einen isolierten Leiterstab, bei dem die provisorische Verbindung wieder gelöst wurde;
- Figur 4: eine Vorrichtung zum Biegen der isolierten, geraden Leiterstäbe.

In den Figuren sind nur die für das Verständnis der Erfindung wesentlichen Elemente und Bauteile gezeigt. Die dargestellten erfindungsgemäßen Verfahren und Vorrichtungen können somit in vielfältiger Weise ergänzt oder auch in für den Fachmann offensichtlicher Weise modifiziert werden, ohne daß hierdurch der Erfindungsgedanke verlassen oder abgeändert würde.

### Wege zur Ausführung der Erfindung

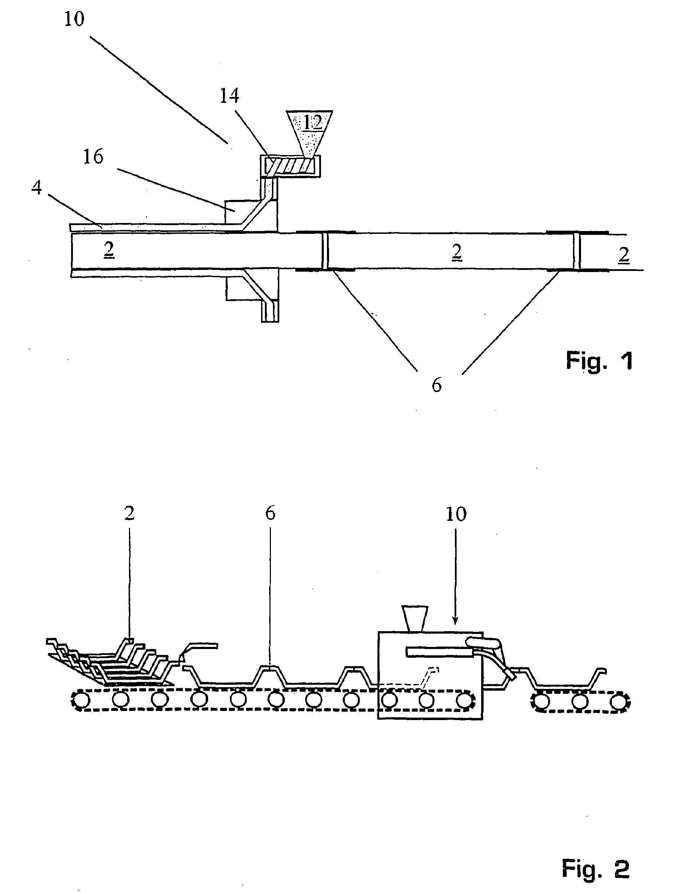

Figur 1 zeigt in einer Übersicht mehrere Leiterstäbe 2 mit rechteckigem Querschnitt, die mittels provisorischer Verbindungen 6 miteinander verbunden sind. Die provisorische Verbindung zwischen den einzelnen Leiterstäben ist in Figur 1 unter Verwendung einer dünnwandigen Hülse verwirklicht, die jeweils über das hintere Ende eines n-ten Leiterstabs und über das vordere Ende eines (n + 1) Leiterstabes gezogen wurde. Die Hülse selbst kann mit den Leiterstäben durch Schweißen, Löten, Klemmen, Schrauben, Kleben etc., verbunden werden. Bevorzugt ist die Hülse steif, um der entstehenden Verbindung eine gewisse Formstabilität zu geben, damit der quasi-unendliche Leiterstab auch kontinuierlich dem Extruder 10 zugeführt werden kann. Alternativ zu einer Hülse können Platten verwendet werden, die lediglich an zwei gegenüberliegenden Flächen des Endteils des rechteckigen Leiterstabes befestigt werden. Eine Verbindung mit Platten ist schneller herzustellen, weist aber nicht die Stabilität der Hülsenverbindung auf. Die Leiterstäbe können auch direkt an ihren Stirnseiten z.B. durch Löten, Schweißen, Kleben etc. miteinander verbunden werden ohne daß zusätzliches Material für die provisorische Verbindung verwendet werden muß.

Die Leiterstäbe selbst sind in der Regel aus einem Bündel von einzelnen, isolierten Leitern aufgebaut. Bei verroebelten Leiterstäben sind die Einzelleiter zum Teil gegenseitig verdrillt, während bei nicht verroebelten Leiterstäben die Einzelleiter ohne Verdrillung parallel zueinander verlaufen. In der Erfindung können Leiterstäbe mit Einzelleitern runden Querschnitts verwendet werden. Besonders vorteilhaft ist jedoch die Anwendung des erfindungsgemäßen Verfahrens auf Leiterstäbe mit Einzelleitern rechteckigen Querschnitts. Bei Verwendung von rechteckigen Querschnitten werden die Vorteile der Erfindung auch dann erzielt, wenn die Querschnitte der Einzelleiter und/oder des Leiterstabs geringfügig von der Rechtecksform abweichen. Bei der Beschichtung sind vorteilhaft stromaufwärts des Extruders Preßroffen angeordnet. Sie halten die Einzelleiter des Leiterstabes dicht zusammen, um ein gleichmäßiges und hohlraumfreies Ummanteln des Leiterstabes mit der Hauptisolierung zu ermöglichen. Andere Möglichkeiten die Einzelleiter eng aneinanderliegend zu halten sind z.B. provisorisches Verkleben der Einzelleiter mit einem elastischen Material oder einem gegen Scherkräfte mechanisch schwachem Kleber, wodurch das spätere Verbiegen nicht behindert wird. Alternativ kann auch ein Kleber verwendet werden, der bei mäßiger Erwärmung (z.B. vor dem Biegen) seine Klebekraft verliert und damit den Biegevorgang begünstigt.

In einer bevorzugten Ausführungsform verlaufen die einzelnen Leiterstäbe gerade, so daß der durch provisorische Verbindungen geformte quasi-unendliche Leiterstab 8 auch gerade verläuft. Der gerade Verlauf des quasi-unendlichen Leiterstabs ermöglicht unter anderem eine leichtere Extruder-Zuführung. In Figur 1 sind drei einzelne Leiterstäbe des gebildeten quasi-unendlichen Leiterstabes 8 erkennbar. Obwohl eine obere Grenze der Anzahl an einzelnen Leiterstäben nicht vorgesehen ist, kann der Isolierprozess aus fertigungstechnischen Gründen bereits nach einer endlichen Zahl von Leiterstäben, z.B. 50, 100, 1000 oder mehr, abgebrochen werden. Nach Verlassen des Extruders ist der quasi-unendliche Leiterstab mit einer Isolierschicht 4 gewünschter Dicke versehen.

Ist die Extrudiervorrichtung durch entsprechende Auslegung in der Lage, auch dreidimensional gebogene Leiterstäbe mit einer Isolierung zu beschichten, so kann in einem weiteren Ausführungsbeispiel das Verfahren der quasi-kontinuierlichen Extrusion auch auf solche gebogenen Leiterstäbe angewendet werden. Dazu werden die gebogenen Leiterstäbe auf die gleiche Weise wie die geraden Leiterstäbe provisorisch miteinander verbunden und so dem Extruder 10 zugeführt (Fig. 2). Da in diesem Ausführungsbeispiel die Evolventen der Leiterstäbe 2 bereits vor der Beschichtung gebogen sind, ist zur Fertigstellung der Leiterstäbe kein weiterer Biegevorgang erforderlich. Somit tritt bei der Fertigung kaum eine mechanische Belastung der Isolierschicht auf, weshalb auch Thermoplast als Material verwendet werden kann.

Im Extruder 10 wird der zu verarbeitende Werkstoff, das Elastomer bzw. für gebogene Leiterstäbe das Elastomer oder das Thermoplast, als Formmasse aus einer Druckkammer im plastifizierten Zustand über ein entsprechend profiliertes Extruderwerkzeug durch eine Düse kontinuierlich ins Freie gepresst. Es entsteht dabei ein rechteckiger Schlauch in einem endlosen Strang, der den quasi-unendlichen Leiterstab ummantelt. Über den Beschickungsaufsatz 12 wird das Rohmaterial (z.B. als Granulat, Pulver, Kautschukmasse) dem Umwandlungsbereich 14 zugeführt, in dem es verdichtet, vorgewärmt und in eine plastifizierte Formmasse umgewandelt wird. Der Transport innerhalb des Umwandlungsbereichs 14 erfolgt zum Beispiel mittels einer Schnecke. Ein Umformwerkzeug 16 besorgt die anschließende Formung des Materialschlauchs auf den rechteckigen Leiterquerschnitt. Es kann sowohl ein Extruderkopf mit rundem Querschnitt im Einlaßbereich (und anschließender Umformung), als auch ein Extruder verwendet werden, der bereits im Materialeinlaßbereich einen rechteckigen Querschnitt besitzt. Die Materialeigenschaften der Hauptisolierung können durch Zugabe von aktiven (z.B. Kieselsäure) und passiven (z.B. Quarzsand) Füllstoffen so eingestellt werden, so daß sie den entsprechenden mechanischen Anforderungen der elektrischen Maschinen genügen, in welche die mit der Hauptisolierung versehenen Statorwicklungen eingebaut werden.

Als Material für die Hauptisolierung ist Silikonelastomer besonders geeignet. Alternativ dazu kann auch ein mechanisch flexibles Thermoplast verwendet werden. Im Ausführungsbeispiel mit gebogenen Leiterstäben kann auch ein handelsübliches, nicht speziell mechanisch flexibles Thermoplast eingesetzt werden.

In manchen Anwendungen werden die Leiterstäbe bevorzugt mit Nutglimmschutz und Absteuerung (Bügelglimmschutz), sowie gegebenenfalls mit Innenglimmschutz versehen. Der Innenglimmschutz einer Statorwicklung ist in der Regel eine leitfähige Materialschicht, die sich zwischen Hauptisolierung und Leiterstab befindet. Sie sorgt für einen um den Leiterstab liegenden, definierten Potentialbelag und verhindert elektrische Entladungen die durch zwischen dem Leiterstab und der Hauptisolierung liegende Hohlräume verursacht werden können. Der Nut- bzw. Außenglimmschutz einer Statorwicklung ist in der Regel eine zwischen Hauptisolierung und Statornut angeordnete leitfähige Materialschicht. Mit dem Außenglimmschutz, welcher wiederum einen definierten Potentialbelag erzeugt, sollen elektrische Entladungen verhindert werden, die beispielsweise durch unterschiedliche Abstände des auf hohem Potential liegenden isolierten Leiterstabes von der auf Masse liegenden Statornut hervorgerufen werden können. Die Absteuerung (Bügelglimmschutz) verhindert in der Regel elektrische Entladungen am Nutaustritt eines Leiterstabs. Im Rahmen der Erfindung verwendete Möglichkeiten zur Aufbringung solcher Schutzschichten sind beispielsweise leitfähige bzw. halbleitfähige Anstriche auf Elastomerbasis, entsprechende Bänder (u.U. selbstverschweißend) die durch Strahlung oder Wärme vemetzt werden können. Alternativ können kalt- oder warmschrumpfende Schläuche (z.B. für Stäbe) bzw. Manschetten (z.B. für Spulen) verwendet werden. Bei dem Gebrauch von Schrumpfschläuchen bzw. Manschetten für den Innenglimmschutz können diese vorteilhaft auf ihrer Innenseite mit einem fließfähigen, plastischen Material versehen werden, um auf der Oberfläche des Leiterstabes befindliche Hohlräume aufzufüllen. Grundsätzlich ist dies auch beim Außenglimmschutz möglich.

In einer weiteren bevorzugten Ausgestaltung des Verfahrens wird die Isolierung zusammen mit Nutglimmschutz und gegebenenfalls Innenglimmschutz durch zwei- bzw. dreifache Ko-Extrusion in einem Arbeitsgang aufgebracht. Die Nutglimmschutzschicht wird dabei bevorzugt nur in dem Bereich des Stabes aufgebracht, der später in der Nut zu liegen kommt. Der Bügelglimmschutz zur Verhinderung von Spitzenentladungen am Ende des Nutglimmschutzes kann durch die bereits erwähnten Verfahren aufgebracht werden.

Eine weitere Möglichkeit eine oder mehrere Materialschichten auf den rechteckigen Leiterstab zu bringen ist die Blasformtechnik. Zunächst wird ein Schlauch extrudiert, welcher anschließend über den Leiter gelegt wird. Diese Technik wird bevorzugt beim Aufbringen mehrerer Schichten verwendet.

Als Material für die Isolierschicht 4 wird in einer bevorzugten Ausführung ein Elastomer verwendet. Das Elastomer zeichnet sich durch hohe Elastizität aus. Dar überhinaus weist es eine hohe elektrische und thermische Beständigkeit auf. Insbesondere bei thermisch hoch belasteten Maschinen werden bevorzugt Silikonelastomere verwandt. Gerade die vorteilhafte Verwendung von Elastomer (im Gegensatz zu anderen Materialien die ebenfalls in einem Extrusionsverfahren aufgebracht werden können) wird den hohen Anforderungen an die Resistenz des Materials und an seine mechanische Flexibilität gerecht. Bei den verwendeten Elastomeren kann es sich um kalt- oder warmvernetzende Typen handeln. Die Vernetzung bei den kaltvernetzenden Typen wird z.B. durch Vermischung zweier Komponenten im Extruder gestartet, wobei eine der Komponenten einen Vernetzer enthält. Bei den warmvernetzenden Typen kann das Elastomer bereits im Extruder und/oder nach Ummantelung des Leiterstabs erwärmt werden. Letzteres erfolgt vorteilhaft durch Heißluft (Ofen) oder durch resistive bzw. induktive Erwärmung des Leiterstabes.

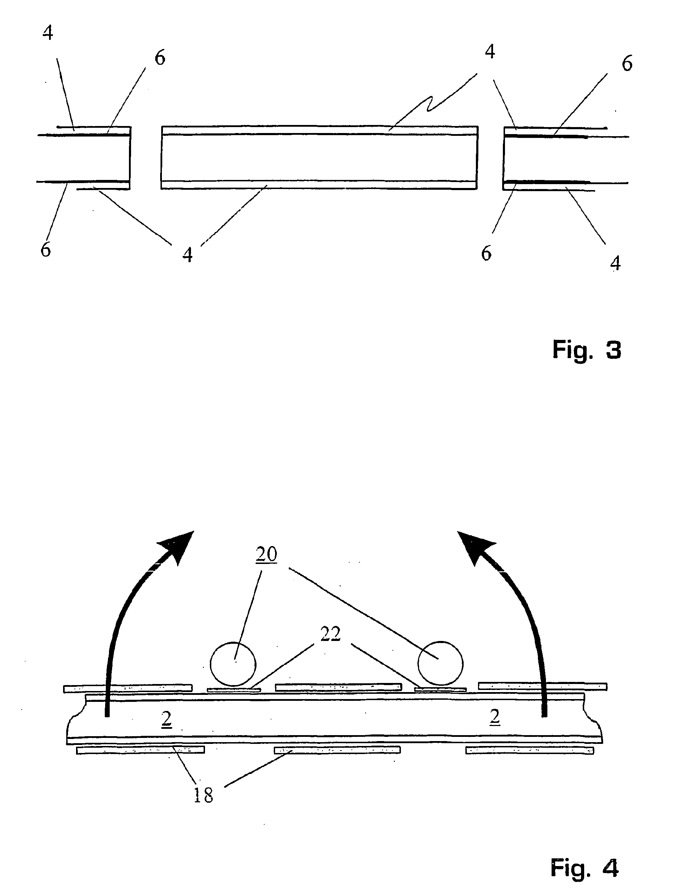

Figur 3 zeigt die mit einer Isolierschicht 4 versehenen, geraden Leiterstäbe 2 nach Lösen der provisorischen Verbindung 6. Bei Verwendung von steifen Hülsen wird der Leiterstab direkt am vorderen und hinteren Ende der Hülse durchgetrennt, so daß lediglich der mit der Hülse versehene Teil des isolierten Leiterstabs als Abfall entsteht. Bei kürzeren Hülsen reduziert sich naturgemäß der Abfall. Bei der Wahl der Hülsenlänge (oder Plattenlänge) wird ein Kompromiß zwischen der Festigkeit der Verbindung und der Länge der entstehenden Abfallstücke geschlossen.

Figur 4 zeigt eine gegenüber dem Stand der Technik modifizierte Biegevorrichtung. Die isolierten, geraden Leiterstäbe werden in die Spannbacken 18 der Biegevorrichtung gelegt und dort durch Bewegung der Spannbacken 18 gegenüber den Radienwerkzeugen 20 in ihre endgültige Form gebracht. Zwischen den Radienwerkzeugen 20 und der Isolierschicht 4 des Leiterstabs 2 ist eine Schutzlage 22 angeordnet, die den an den Radienwerkzeugen entstehenden Druck flächenmäßig verteilt und so ein übermäßiges Quetschen der Isolierschicht verhindert. Durch die gleichmäßig verteilte mechanische Belastung der Isolierschicht aus Elastomer werden Beschädigungen der Isolierschicht verhindert. Das Biegen der Evolvente führt zu sehr großen Dehnungen in der Isolierschicht, die bei herkömmlichen Materialien wie Hochtemperatur-Thermoplaste zu Brüchen in der Isolierschicht führen. Polyethylen hätte die notwendige Flexibilität jedoch nicht die für übliche elektrische Maschinen erforderliche Temperaturbeständigkeit, könnte jedoch für Maschinen mit geringer thermischer Ausnutzung (T < 90° C) prinzipiell in ähnlicher Weise eingesetzt werden. Gleiches gilt für andere, flexible Thermo plaste.

Ist der Leiterstab aus einem Bündel von Einzelleitern aufgebaut, so erfolgt durch das Biegen der bereits mit der Hauptisolierung versehenen Leiterstäbe eine Relatiwerschiebung der Einzelleiter untereinander als auch der an der Oberfläche des Leiterstabes liegenden Einzelleiter gegenüber der Hauptisolierung. Vorteilhaft ist die zwischen Leiterstab und Hauptisolierung liegende Grenzschicht so beschaffen, daß sie eine reibungsreduzierte Verschiebung der Einzelleiter gegenüber der Hauptisolierung ermöglicht. Dies kann z.B. durch Behandlung des Leiterstabs mit Trennmitteln erreicht werden. Das Auftreten von Spalten durch diese Relativ bewegung an der Grenzfläche zum Leiter ist bedeutungslos, wenn in diesem Bereich ein fest mit der Hauptisolierung verbundener Innenglimmschutz verwendet wird. Ohne Innenglimmschutz ist die Verschiebung zumeist unkritisch, da im Biegebereich (nach der Absteuerung) das Feld reduziert ist.
Bei Verwendung eines Innenglimmschutzes weist dieser vorteilhaft eine gute Haftung gegenüber der Hauptisolierung auf, jedoch geringere Haftung gegenüber der Oberfläche des Leiterstabes. Dies wird vorzugsweise dadurch erreicht, daß Isolierung und Glimmschutz auf der gleichen chemischen Materialbasis beruhen (chemisch Bindung), während Innenglimmschutz und Drahtlackierung unterschiedliche Materialbasis mit vorzugsweise geringer Affinität besitzen. Trennmittel können diesen Effekt verstärken. Die Leiterstäbe selbst sind im Bereich der späteren Biegestellen bevorzugt nicht verroebelt.

### Bezugszeichenliste

- 2: Leiterstab
- 4: Isolierschicht
- 6: provisorische Verbindung
- 8: quasi-unendlicher Leiter
- 10: Extruder
- 12: Beschickungsaufsatz
- 14: Umwandlungsbereich
- 16: Umformwerkzeug
- 18: Spannbacken
- 20: Radienwerkzeug
- 22: Schutzlage

## Patentansprüche

1. Verfahren zum Aufbringen der Hauptisolierung von Leiterstäben, insbesondere Leiterstäben für Statorwicklungen, wobei die Leiterstäbe einen rechteckigen Querschnitt aufweisen und das Verfahren die folgenden Schritte umfasst:
a) Verbinden der einzelnen Leiterstäbe zu einem quasi-unendlichen Leiterstab mit rechteckigem Querschnitt;
b) kontinuierliche Ummantelung des quasi-unendlichen, rechteckigen Leiterstabes mit einer Hauptisolierung;
c) Heraustrennen oder Lösen der nicht verwendbaren Verbindungsstellen.

2. Verfahren nach Anspruch 1, wobei in Schritt a geradlinig gestreckte Leiterstäbe verwendet werden und die Ummantelung in Schritt b mit einem Elastomer, insbesondere einem Silikonelastomer erfolgt.

3. Verfahren nach einem der vorstehenden Ansprüche wobei, die Ummantelung in Schritt b durch ein Extrudierverfahren erfolgt.

4. Verfahren nach einem der vorstehenden Ansprüche, wobei das Verfahren einen weiteren Schritt umfasst;
d) Biegen der Evolvente der isolierten Leiterstäbe.

5. Verfahren nach Anspruch 1, wobei in Schritt a gebogene Leiterstäbe verwendet werden und die Ummantelung in Schritt b mit einem Thermoplast oder einem Elastomer, insbesondere einem Silikonelastomer erfolgt.

6. Verfahren nach einem der Ansprüche 1, 2, 4 oder 5, wobei die Ummantelung in Schritt b durch ein Blasforrnverfahren erfolgt.

7. Verfahren nach einem der vorstehenden Ansprüche, wobei in Schritt b zusätzlich ein Innenglimmschutz zwischen Hauptisolierung und Leiteroberfläche aufgebracht wird, wobei die Haftung zwischen Innenglimmschutz und Hauptisolierung größer ist als die Haftung zwischen Innenglimmschutz und Leiteroberfläche.

8. Verfahren nach einem der vorstehenden Ansprüche, wobei in Schritt b zusätzlich ein Nutglimmschutz und/oder eine Absteuerung aufgebracht wird.

9. Verfahren nach einem der vorstehenden Ansprüche, wobei Leiterstäbe bestehend aus Einzelleitern verwendet werden, wobei die Einzelleiter bevorzugt rechteckigen Querschnitt aufweisen.

10. Verfahren nach Anspruch 9, wobei die Einzelleiter provisorisch miteinander verbunden sind

11. Verfahren nach einem der Ansprüche 9 oder 10, wobei die Leiterstäbe in Bereich der Evolvente nicht verroebelt sind.

12. Verfahren nach Anspruch 4, **dadurch gekennzeichnet, dass** das Biegen der Evolvente der isolierten Leiterstäbe in einer Biegevorrichtung erfolgt, wobei die Biegevorrichtung Spannbacken (18), Radienwerkzeuge (20) sowie im Bereich der Radienwerkzeuge angeordnete Schutzlagen (22) aufweist und wobei die Schutzlagen beim Biegen der Evolvente zwischen den Radienwerkzeugen und den isolierten Leiterstäben angeordnet sind.

## Claims

1. Method for application of the main insulation to conductor bars, in particular conductor bars for stator windings, with the conductor bars having a rectangular cross section, and the method comprising the following steps:
a) connection of the individual conductor bars to form a quasi-infinite conductor bar with a rectangular cross section;
b) continuous sheathing of the quasi-infinite, rectangular conductor bar with main insulation;
c) cutting out or detaching of the unusable connecting points.

2. Method according to Claim 1, wherein, in step a, conductor bars which extend in straight lines are used and the sheathing in step b is carried out with an elastomer, preferably with a silicone elastomer.

3. Method according to one of the preceding claims, wherein the sheathing in step b is carried out by means of an extrusion process.

4. Method according to one of the preceding claims, with the method comprising a further step;
d) bending of the evolvent of the insulated conductor bars.

5. Method according to Claim 1, wherein bent conductor bars are used in step a, and the sheathing in step b is carried out using a thermoplastic or an elastomer, in particular a silicone elastomer.

6. Method according to one of Claims 1, 2, 4 or 5, wherein the sheathing in step b is carried out by means of a blow forming process.

7. Method according to one of the preceding claims, wherein internal corona-discharge protection is additionally fitted between the main insulation and the conductor surface in step b, with the adhesion between the internal corona-discharge protection and the main insulation being greater than the adhesion between the internal corona-discharge protection and the conductor surface.

8. Method according to one of the preceding claims, wherein slot corona-discharge protection and/or turning point are/is applied in step b.

9. Method according to one of the preceding claims, wherein conductor bars composed of individual conductors are used, with the individual conductors preferably having a rectangular cross section.

10. Method according to Claim 9, wherein the individual conductors are provisionally connected to one another.

11. Method according to one of Claims 9 or 10, wherein the conductor bars are not transposed in the area of the evolvent.

12. Method according to Claim 4, **characterized in that** the bending of the evolvent of the insulated conductor bars takes place in a bending apparatus which has clamping jaws (18), bending tools (20) and protective layers (22), arranged in the area of the bending tools, with the protective layers being arranged between the bending tools and the insulated conductor bars during the bending of the evolvent.

## Revendications

1. Procédé pour installer l'isolation principale sur des barres conductrices, en particulier les barres conductrices pour enroulements de stator, dans lequel les barres conductrices présentent une section transversale rectangulaire, le procédé comprenant les étapes suivantes qui consistent à :
a) relier les différentes barres conductrices en une barre conductrice quasi infinie à section transversale rectangulaire,
b) envelopper en continu une isolation principale autour de la barre conductrice quasi infinie à section transversale rectangulaire,
c) séparer ou détacher les emplacements de liaison inutilisables.

2. Procédé selon la revendication 1, dans l'étape a duquel on utilise des barres conductrices allongées en ligne droite, l'enveloppement de l'étape b s'effectuant avec un élastomère et en particulier un élastomère au silicone.

3. Procédé selon l'une des revendications précédentes, dans lequel l'enveloppement de l'étape b s'effectue par un procédé d'extrusion.

4. Procédé selon l'une des revendications précédentes, qui présente une autre étape qui consiste à :
d) cintrer la développante des barres conductrices isolées.

5. Procédé selon la revendication 1, dans l'étape a duquel on utilise des barres conductrices cintrées, l'enveloppement de l'étape b s'effectuant avec un élastomère et en particulier un élastomère au silicone.

6. Procédé selon l'une des revendications 1, 2, 4 ou 5, l'enveloppement de l'étape b s'effectue par un procédé de moulage-soufflage.

7. Procédé selon l'une des revendications précédentes, dans l'étape b duquel on applique en supplément une protection intérieure contre les décharges entre l'isolation principale et la surface du conducteur, l'adhérence entre la protection intérieure contre les décharges et l'isolation principale état supérieure à l'adhérence entre la protection intérieure contre les décharges et la surface du conducteur.

8. Procédé selon l'une des revendications précédentes, dans l'étape b duquel on applique en supplément une protection intérieure contre les décharges dans les rainures et/ou une évacuation des décharges.

9. Procédé selon l'une des revendications précédentes, dans lequel on utilise des barres conductrices constituées de conducteurs individuels, les conducteurs individuels présentant de préférence une section transversale rectangulaire.

10. Procédé selon la revendication 9, dans lequel les conducteurs individuels sont reliés provisoirement les uns aux autres.

11. Procédé selon les revendications 9 ou 10, dans lequel les barres conductrices ne sont pas transposés dans la région de la développante.

12. Procédé selon la revendication 4, **caractérisé en ce que** le cintrage de la développante des barres conductrices isolées a lieu dans un dispositif de cintrage, le dispositif de cintrage présentant des mâchoires de serrage (18), des outils de cintrage (20) ainsi que des couches de protection (22) prévues dans la région des outils de cintrage, tandis que pendant le cintrage de la développante, les couches de protection sont disposées entre les outils de cintrage et les barres conductrices isolées.
